Europäisches Patentamt

European Patent Office

Office européen des brevets

(19)

(11) **EP 1 347 662 A1**

(12) **EUROPEAN PATENT APPLICATION**

| | |
|---|---|
| (43) Date of publication:<br>**24.09.2003 Bulletin 2003/39** | (51) Int Cl.⁷: **H04Q 7/30** |

(21) Application number: **02251231.3**

(22) Date of filing: **22.02.2002**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **LUCENT TECHNOLOGIES INC.**<br>**Murray Hill, New Jersey 07974-0636 (US)** | (72) Inventor: **Chen, Xiaobao**<br>**Swindon, Wiltshire SN5 5DQ (GB)**<br><br>(74) Representative: **Sarup, David Alexander**<br>**Lucent Technologies NS UK Limted,**<br>**5 Mornington Road**<br>**Woodford Green, Essex IG8 OTU (GB)** |

(54) **Assignment of QoS within a radio access network**

(57) A Universal Mobile Telecommunications System UMTS telecommunications network comprises at least one radio network controller, plurality of base stations and a user terminal. A base station is operative to receive from the user terminal UMTS data packets having an associated UMTS quality of service QoS class. The base station is operative to communicate the data packets to an associated radio network controller in accordance with an internet protocol IP by assigning an internet protocol IP QoS class dependent upon whether soft handover of the user terminal to another base station is occuring and/or UMTS QoS class.

## Fig. 8
### The IP Transport Queueing Model For In IP UTRAN

**Description**

**Technical Field**

The present invention relates to a Universal Mobile Telecommunications System UMTS telecommunications network comprising at least one radio network controller, plurality of base stations and a user terminal. The present invention also relates to a base station therefor. The present invention also relates to a user terminal therefor.

**Background of the Invention**

The primary factors driving the migration of wireless networks towards wireless internet protocol IP networks include improving access to public and private internet protocol IP transport networks, better scalability and flexibility, the cost-effectiveness of internet protocol IP infrastructure, its transport efficiency, and the possibility of providing internet data and multimedia services

However, the great uncertainty and risk that wireless network operators face is the complexity of the transitions that will have to take place to move from today's circuit-based wireless networks to internet protocol IP based wireless networks. Ideally, the wireless internet protocol IP networks will exploit existing network components where available rather than create separate overlay networks that increase the overall cost and complexity of providing wireless service.

Internet protocol radio access network radio access networks IP RANs, in combination with an internet protocol IP core network, will supply wireless network operators with a complete end-to-end Third generation (3G) solution. Different access technologies, such as fixed and mobile, indoor or outdoor, public or private, wireline and wireless, will converge and extend to other types of access networks (e.g., IEEE 802.11, HiperLAN 2), leading to an integrated communications network for the next generation.

Adoption of internet protocol radio access network IP RAN provides many benefits to wireless services including:efficient transport for the wireless high speed data, graceful evolution from circuit and ATM networks, reliable network architecture, flexibility to customer-specific network needs (Layer 1 & Layer 2 independence), and mobility across access technologies (network convergence).

UMTS and code division multiple access CDMA2000 radio access networks have features of Softer/Soft Handover. Softer/soft handover is as important as Fast Power Control in code division multiple access CDMA-based systems. Without softer/soft handover, there would be near-far scenarios of a mobile station causing one cell to penetrate deeply into an adjacent cell without being power-controlled by the latter. Very fast and frequent hard handovers could largely avoid this problem; however, they can be executed only with certain delays during which the near-far problem could develop. Therefore, as with fast power control, soft/softer handovers are an important interference-mitigating tool in wideband code division multiple access WCDMA.

The use of internet protocol IP as the transport control (routing and network addressing/connectivity) in internet protocol radio access networks IP RANs brings about new challenges for achieving efficient soft handover control.

Internet protocol radio access networks IP RANs have been a subject that is under intensive study, for example in third generation partnership project radio access network 3GPP RAN working groups. The work is still very much at early stage where most study has been on defining the architecture and identifying the problems and issues such as quality of service QoS and transport efficiency over the internet protocol based network transport links. There have been some proposals about supporting the key features of code division multiple access CDMA/wideband code division multiple access WCDMA radio networks, such as using soft handover in internet protocol based networks, but the solutions have been based on changing and adapting the existing radio access network RAN architecture.

Two major issues of concern exists with the internet protocol radio access network IP RAN solution. The first is that due to stringent packet delivery constraints such as delay, packet loss, and jitter to achieve and maintain efficient soft handover in third generation 3G radio access network RAN, it is not clear so far how internet protocol IP-based transport links (either point-to-point or mesh network) support the soft handover requirements over the internet protocol -based Network Transport Layer (IP-NTL) in third generation 3G radio access network RAN.

The second concern is that there have been some proposals about adapting the existing radio access network RAN architecture such as to separate the control from the media bearer and centralise the control function in a dedicated radio control server. This implies a significant impact over existing third generation radio access network 3G RAN architecture such as inter-working functions, cost etc.

Softer Handover:

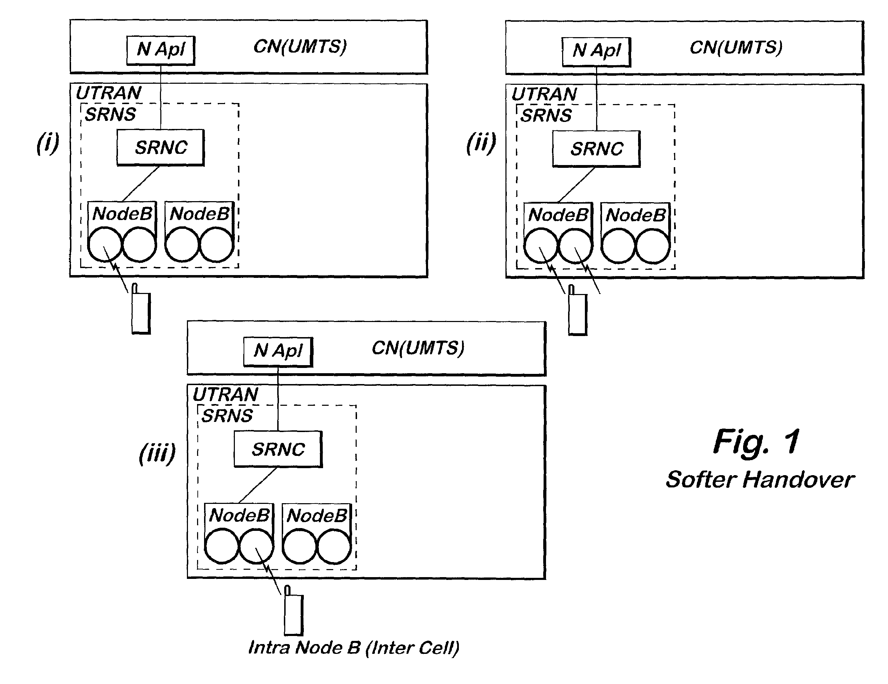

During the softer handover, a mobile station is in the overlapping cell coverage area of two adjacent sectors of a base station (Node B). A base station has several directional antennas hence a corresponding number of coverage area sectors. Figure 1 shows the scenario of Intra Node B softer handover, i.e. within one base station. The reference symbols used in the Figure are standard UMTS abbreviations.

As shown in Figure 1, in going from (i) before softer handover to (iii) after softer handover, (ii) during softer handover the communications between mobile station and the base station (Node B) take place concurrently via two air interface channels, one for each sector separately. This requires the use of two separate CDMA codes in the downlink direction, so that the mobile station can distinguish the signals. The two signals are received in the mobile station by means of Rake processing by a Rake receiver, very similar to multi-path reception, except that the fingers of the Rake receiver need to generate the respective code for each sector for the appropriate despreading operation.

In the uplink direction, a similar process takes place at the base station (Node B): the code channel of the mobile station is received in each section, then routed to the same baseband Rake receiver and amaximal ratio combined there in the usual way. During softer handover only one power control loop per connection is active. Softer handover typically occurs in about 5 -15% of connections. Softer handover does not require uplink frame "combining" (i.e selection) at the radio network controller RNC as required for soft handover as explained below.

## Summary of the Invention

The present invention provides a Universal Mobile Telecommunications System UMTS telecommunications network comprising at least one radio network controller, a plurality of base stations and a user terminal,

a base station being operative to receive from the user terminal UMTS data packets having an associated UMTS quality of service QoS class,

the base station being operative to communicate the data packets to an associated radio network controller in accordance with an internet protocol IP by assigning an internet protocol IP QoS class dependent upon whether soft handover of the user terminal to another base station is occuring and/or UMTS QoS class.

Furthermore, preferably the internet protocol is DiffServ. The present invention in its preferred embodiments advantageously provides a definition of an unambiguous DiffServ Control Point DSCP for supporting soft handover and voice-over-internet protocol VoIP traffic.

Preferably an expedited internet protocol IP QoS class is assigned to data packets of any UMTS QoS class directed from the user terminal during soft handover of the user terminal. Preferably each UMTS packet from the user terminal includes an indicator of whether soft handover is occurring, the internet protocol QoS class being assigned dependent the indicator upon formatting the UMTS data packet into an internet protocol IP data packet. Furthermore the indicator is preferably a single bit.

Preferably each UMTS data packet includes an indicator of UMTS QoS class, the internet protocol QoS class being assigned dependent upon UMTS QoS class upon formatting the UMTS data packet into an internet protocol IP data packet. Furthermore, preferably the indicator of UMTS QoS class is two bits.

Furthermore, preferably a data packet of expedited UMTS QoS class is assigned an expedited internet protocol QoS class.

Furthermore, preferably the user terminal has a protocol stack comprising a framing protocol layer operative to provide UMTS data packets above an internet protocol IP layer operative to provide IP data packets..

Some preferred embodiments thus have a Radio Frame Protocol and internet protocol adaptation FPIPA layer to exchange soft handover information and UMTS quality of service QoS class information so that the internet protocol IP transport bearer takes actions accordingly; More specifically, a radio framing protocol and internet protocol protocol adaptation FPIPA function which allows for exchange of soft handover information and UMTS quality of service QoS Class information and internet protocol IP quality of service QoS information to select an appropriate internet protocol IP transport bearer and configuration.

Preferably internet protocol data packets of an expedited IP QoS class are queued at the base station for transmission to the associated radio network controller in a queue or queues which takes precedence over other IP data packets for transmission thereto. Furthermore preferably priority queueing PQ is proposed to support soft handovers, for example inter-base station (Node B)/intra radio network subsystem RNS soft handovers and inter-radio network subsystem RNS soft handovers

Preferably a single queue is provided for all IP data packets of the expedited IP service class to be transmitted from the base station to the associated radio network controller. Furthermore, said data packets can be voice-over-internet-protocol VoIP data packets and IP data packets including an indicator that soft handover is occurring.

Alternatively preferably queues are provided for each of a plurality of different types of IP data packets of the expedited IP service class to be transmitted from the base station station to the associated radio network controller. For example, one queue is for IP data packets during soft handover and another queue is for VoIP traffic.

Thus in preferred embodiments two static priority queuing PQ mechanisms are proposed which feature different control complexity, resource utilisation and level of achievable quality of service QoS. These are appropriate for managing the packet queues and traffic flows for soft handover traffic and/or real-time service traffic such as voice-over-internet protocol VoIP traffic.

Preferably resources for data transmission are allocated between the queues at a base station dependent upon previous usage. Furthermore, preferably the dynamic allocation depends on the the current and previous proportion of connections to user terminals which are to terminals in soft handover. Furthermore preferably the dynamic allocation is undertaken by a soft handover bandwidth broker (SHO BWB) unit in the base station.

In preferred embodiments dynamic priority queuing PQ is provided for soft handover traffic, and a soft handover bandwidth broker SHO BWB is proposed to improve resource utilisation and maintain the necessary quality of service QoS required to complete successful soft handover.

The present invention also provides a UMTS base station operative to receive, in use, from a user terminal UMTS data packets having an associated UMTS quality of service QoS class, the base station being operative, in use, to communicate the data packets to an associated radio network controller in accordance with an internet protocol IP by assigning an internet protocol IP QoS class dependent upon whether soft handover of the user terminal to another base station is occuring and/or UMTS QoS class.

The present invention also provides a user terminal operative to provide UMTS data packets each including data which indicates whether the user terminal is in the process of soft handover and/or data which indicates associated UMTS quality of service QoS class. Furthermore, preferably the data packets include both indicators.

Furthermore, the present invention also provides a method of communicating data packets in a Universal Mobile Telecommunications System UMTS telecommunications network comprising a plurality of base stations and a plurality of user terminals,

the base stations communicating from/to user terminals UMTS data packets with a quality of service QoS dependent upon UMTS quality of service QOS class,

the base stations communicating the data packets in accordance with internet protocol IP by assigning an internet protocol IP QoS class dependent upon whether soft handover of the user terminal between base stations is occurring and/or UMTS QoS class.

It will be seen that the present invention in its preferred embodiments advantageously provides mechanisms to support soft handover in internet protocol-based radio access network IP RAN. Key problems are addressed in supporting soft handover in third generation 3G internet protocol IP radio access network RAN using code division multiple access CDMA/wideband code division multiple access WCDMA based radio access technologies. There is no need to change the existing radio access network RAN architecture and using and improving existing technologies is possible to achieve and maintain efficient soft handover control for real-time services such as voice over internet protocol VoIP. No changes are required of existing third generation radio access network 3G RAN architecture and minimum adaptation of radio frame formats to support efficient soft handover control. The impact of internet protocol-based transport is reduced on the control and architecture of third generation radio access network 3G RAN.

## Brief Description of the Drawings

A preferred embodiment of the present invention will now be described by way of example and with reference to the drawings, in which:

Figure 1 is a diagrammatic illustration of softer handover (prior art),
Figure 2 is a diagrammatic illustration of soft handover between base stations,
Figure 3 is a diagrammatic illustration of soft handover between radio network systems,
Figure 4 is a diagrammatic illustration of an uplink data frame (of a dedicated channel),
Figure 5 is a diagrammatic illustration of the spare extension octet shown in Figure 4,
Figure 6 is a diagrammatic illustration of the protocol stack used,
Figure 7 is a diagrammatic illustration of the DiffServ processing functions used.
Figure 8 is a diagrammatic illustration of the queueing configuration,
Figure 9 is a diagrammatic illustration of one option for static provisioning of link capacity,
Figure 10 is a diagrammatic illustration of another option for static provisioning of link capacity, and
Figure 11 is a diagrammatic illustration of dynamic provisioning of link capacity.

## Detailed Description

Soft Handover:

During soft handover, a mobile station is in the overlapping cell coverage area of two sectors belonging to different base stations (Node B). This can be intra radio network subsystem RNS (i.e. between Node-Bs in the same radio network subsystem RNS), or inter-radio network subsystem RNS (i.e. between Node-Bs in different radio network subsystems RNSs).

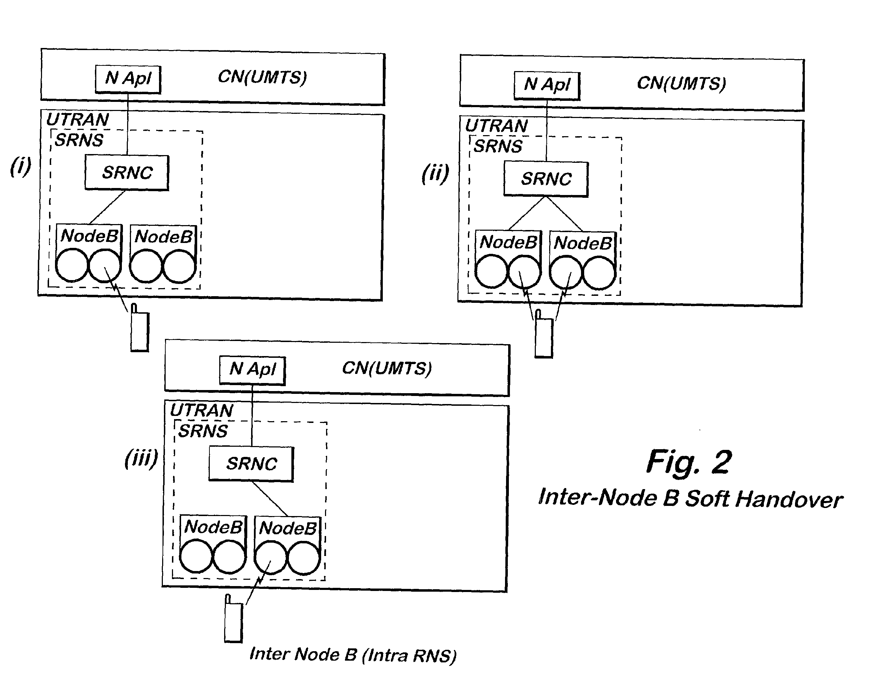

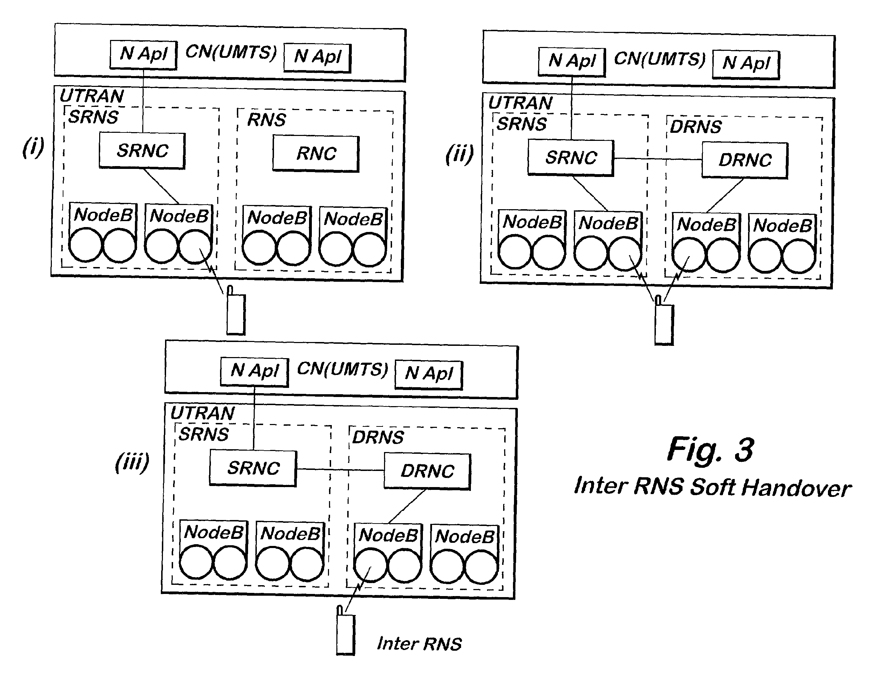

The soft handover for intra-radio network subsystem RNS and inter-radio network subsystem RNS is shown in Figure 2 and 3, respectively. In these figures (i) is before, (ii) is during and (iii) is after softhandover. As in softer handover, the communications between mobile station and the base stations (Node B) take place concurrently via two air interface channels, from each base station (Node B) separately. As in softer handover, both channels (signals) are received at the mobile station by maximal ratio combining Rake processing. From the point of view of the mobile station, there are very few differences between the softer and soft handover.

In the uplink direction, however, soft handover differs significantly from softer handover: the code channel of the mobile station is received from both base stations (Node Bs), but the received data is then routed to the radio network controller RNC for combining. This may become an important issue in internet protocol radio access network IP RAN where internet protocol IP transport is used on the so-called Iub interface between a base station (Node B) and radio network controller RNC and the so-called Iur interface between two radio network controllers RNCs. The internet protocol IP transport and the associated control must meet the requirements for the frame selection and combining, especially the delay requirements.

Frame selection and combining is done so that the same frame reliability indicator as provided for outer loop power control is used to select the better frame between the two possible candidates within the radio network controller RNC. This selection takes place after each inter-leaving period, i.e. every 10 - 80 ms.

Another difference compared to softer handover is that during the soft handover two power control loops per connection are active, one for each base station.

Soft handover occurs in about 20 - 40 % of connections. To cater for soft handover connections, the following additional resources need to be provided by the system: an additional Rake receiver channels in the base stations, additional transmission links between base station and radio network controller RNC, and additional Rake fingers in the mobile stations.

Macro-Diversity Combining

In soft handover, code division multiple access CDMA systems use so- called Macro Diversity to enhance coverage and call quality by determining which of two radio links gives the best quality. Macro Diversity is achieved when two or more base stations (Node B) are demodulating and decoding the uplink signal from a particular user terminal (user equipment UE). In this scenario, the serving radio network controller SRNC receives a frame (packet data unit PDU) from each base station (Node B) via the Iub interface, and if necessary the Iur interface. The serving radio network controller SRNC performs Frame Selection on the multiple received frames and passes on a single frame to the higher layer. On the downlink, the serving radio network controller SRNC performs frame distribution which involves multiple copies of a single frame being distributed via each radio leg. A radio leg is a transport path from serving radio network controller SRNC to user terminal (user equipment UE) via a base station (Node B).

Frame Selection

Frame selection involves passing on to the higher layer the higher quality frame from the multiple frames received. It should be noted that frame selection task actually selects at a transport block (TB) level not at a per frame (packet data unit PDU) level as the name suggests.

The frame selection task involves the use of a frame selection algorithm to determine which transport block TB is of highest quality. There are two types of measures (metrics) used to determine which of the transport blocks received should be passed to the higher level.The first metrics is the cyclic redundancy check indicators (CRCI) which are received as part of each packet data unit PDU as shown in Object Identifier. Cyclic redundancy check CRC is referred to as a "hard" indication of quality because it has a pass/fail behaviour.

The second metric used is the Quality Estimate (QE) which is also received as part of each packet data unit PDU as shown in Object Identifier. Quality estimate QE is referred to as a "soft" metric since it has a range of values. Cyclic redundancy check indicator CRCI has precedence over quality estimate QE.

Frame Selection Requirements on radio network controller RNC

Frame selection applies to dedicated channels DCHs on the uplink on the Iub and Iur interfaces. The radio network controller RNC performs selection from a maximum of six frames received from different radio legs.

Frame Distribution

The frame distribution task is responsible for the duplication of a single frame, received from the higher layer, to all the radio legs in operation.

Frame Distribution applies to downlink dedicated channels on the Iub and Iur interfaces. The radio network controller RNC can support distribution of a single frame (packet data unit PDU) on up to six different radio legs. The radio network controller RNC includes a frame distributor which distributes frames with incrementing CFN (Connection Frame Number). It should be noted that if the radio network controller RNC has no frame to deliver then the connection frame number CFN of consecutive frames may increase by more than one.

The Frame Selection Procedure

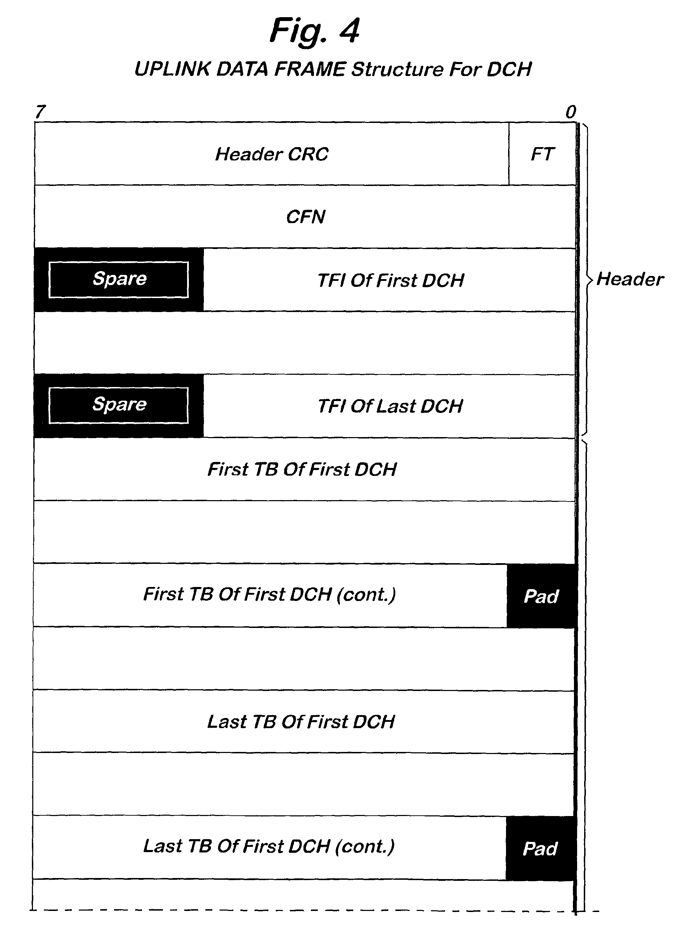

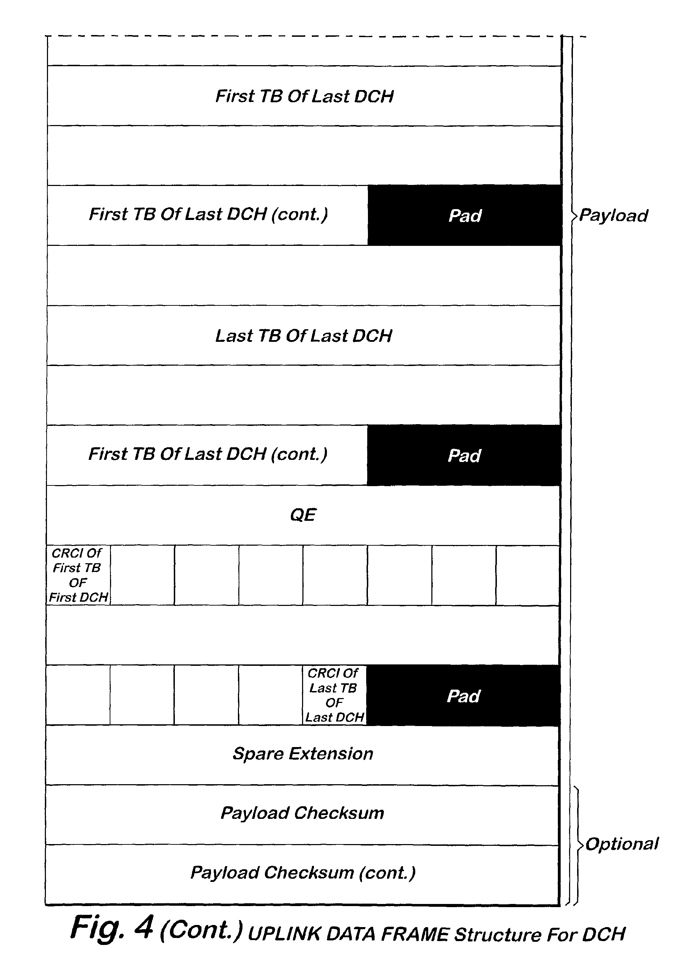

As shown in Figure 4, transport blocks may be multiplexed over one or a number of radio frames: multiple transport blocks may be sent in one radio frame over the air interface. Alternatively, a single transport block TB may be sent in multiple radio frames over the air interface.

As shown in Figure 4, the number of TFI fields indicates the number of dedicated channels multiplexed in the same transport bearer. The size and the number of transport blocks for each dedicated channel are defined by the correspondent TFI. For each transport block TB, there is a cyclic redundancy check indicator CRCI irrespective of the size of the transport block TB, i.e. the cyclic redundancy check indicator CRCI is included also when the transport block TB length is zero.

Radio frames are produced by the physical layer at base station (Node B). The transport blocks in a radio frame are then encapsulated by a protocol called dedicated channel framing protocol (DCHFP) and forwarded to the radio network controller RNC. The base station (Node B) encodes the frame number into the header of the dedicated channel framing protocol DCHFP frame and place the transport blocks for the dedicated channel or dedicated channels carried by the dedicated channel framing protocol DCHFP frame (in sequential order as prescribed in Third Generation Partnership Project 3GPP Technical Specification 25.247 in the body of the dedicated channel framing protocol DCHFP frame. The dedicated channel framing protocol DCHFP generates one packet data unit PDU at the end of each transmission time interval (TTI). The transmission interval length is a multiple of 10 ms, depending on how many radio frames the base station (Node B) must receive in order to extract the transport blocks.

At the radio network controller RNC, the transport blocks carried as dedicated channel framing protocol DCHFP packet data unit PDU payload are selected. The frame selection procedure includes the following steps in sequential order:

(i) Initialisation: Creation of a frame selection instance with Timeout value:

A dedicated channel framing protocol DCHFP instance is created to support either a single dedicated channel or a set of co-ordinated dedicated channels. The primary consideration for setting up and selecting the appropriate Timeout value is to guarantee the bounded Delay and Jitter on the transmission of transport blocks over the Iub/Iur so that the radio network controller RNC will receive the relevant frames in time. The maximum number of supported soft-handover radio legs is also set (e.g. six).

(ii) Receiving packet data units PDUs (dedicated channel radio frames DCHRFs): the macro-diversity combiner MDC in the radio network controller RNC waits to receives all the dedicated channel radio frames DCHRFs with the same connection frame number CFN:

Only those packet data units PDUs with a frame number matching the existing expected value of connection frame number CFN will be received, otherwise they will be discarded. The macro-diversity combiner MDC is provided with a maximum delay value to restrict the delay of the frame selection process so as to meet the overall delay budget within the UMTS terrestrial radio access network UTRAN.

In addition, the maximum delay and jitter values over Iub/Iur should guarantee that the relevant transport blocks must arrive at the serving radio network controller SRNC in time to perform frame selection. The selection of the maximum delay value for the frame selection is service dependent.

Considering the most complicated case which is InterRNC Soft handover where transmissions on both Iub and Iur take place (Figure 3) and assuming that the average delay on the Iub+Iur interface is D and the maximum jitter (i.e statistical variance) is J, the timeout value should be set no more than D + J (being the maximum delay on the Iub + Iur). It is also assumed that the base station (Node B) and radio network controller RNC are frame synchronised. The frames from relevant radio legs thus arrive at times of N* 10ms, N = 0, 1, 2, 3, ... .. N later than the first, where N is the number of radio legs that are involved in the macro-diversity combining MDC. For example, where up to six radio legs can be supported, N=6. The maximum number of radio frames that arrive within the Timeout period is:

$$[(D+ J) /N*10].$$

If the number of transport blocks in each frame is Ntb, then the maximum number of transport blocks to be selected is:

$$Ntb*[(D + J)/N*10].$$

This number can be used to define the buffer length required, or the maximum frame selection delay value, during macro-diversity combining MDC.

The macro-diversity combiner MDC starts the frame selection process when either all packet data unit PDUs with the same connection frame number CFN from the radio legs involved are received, or the maximum delay value has been reached (timeout)in which case frame selection is performed over the transport blocks received during the timeout period. The maximum delay value (timeout value) is used more often for services of real-time nature such as Conversational Class.

(iii) Frame Selection: the macro-diversity combining MDC function compares the frames and selects the "best" transport blocks based on the cyclic redundancy check indicator CRCI and the quality estimate QE metrics.

The transport blocks are processed in the same order as they appear in the dedicated channel framing protocol DCHFP packet data unit PDU. The macro-diversity combiner MDC selects frames based on the cyclic redundancy check indicator CRCI result of the transport blocks. In the absence of a copy of a transport block TB with a valid cyclic redundancy check indicator CRCI the macro-diversity combiner MDC will use quality estimate QE information i.e. choose the transport block TB with the lowest QE value. However, cyclic redundancy check indicator CRCI based selection has precedence over quality estimate QE-based selection. If more than one transport block is selected because they have identical cyclic redundancy check indicator CRCI and quality estimate QE values, then either/any is selected and passed to the higher layer.

(iv) Frame Delivery: the macro-diversity combiner MDC passes the selected information to the higher layer which constructs a frame to be distributed to the user terminal (user equipment UE), and then moves to next frame (connection frame number CFN being incremented).

WCDMA Soft Handover Control in internet protocol IP radio access network RAN

From the macro-diversity combining MDC procedure and corresponding requirements on the frame selection procedures, two major implications apply to the internet protocol IP-based Iub/Iur interface in internet protocol IP UMTS terrestrial radio access network UTRAN.

(1) transfer delay/jitter must meet the requirements to support (i) efficient Inter-NodeB/Intra-radio network subsystem RNS soft handover and (ii) inter-radio network subsystem RNS soft handover. It should match or be better than the performance of ATM based Iub/Iur.
(2) Fragmenting and splitting one dedicated channel framing protocol DCHFP packet data unit PDU across more than one internet protocol IP packets is avoided so as to guarantee that a minimum number of transport blocks are available for selection during the timeout period, and to minimise control complexity.

The quality of service QoS/Transport Configuration of Iub/Iur in internet protocol radio access network IP RAN

For quality of service QoS support, DiffServ is mandatory on Iub/Iur. For transport, point-to-point protocol multiplexing (PPPMux) and multiple protocol label switching (MPLS) are two options. Point-to-point protocol multiplexing (PPPMux) is ideally used for low-speed/bandwidth limited last mile link such as T1/E1 links between base station Node-B and radio network controller RNC. Multiple protocol label switching MPLS is best deployed in a mesh network connection between base station (Node B)s and radio network controllers RNCs. Based on the above considerations on the major implications of internet protocol IP-based Iub/Iur interfaces with soft handover over internet protocol IP radio access networks RAN, the following issues arise:

- Service class-based selection of DiffServ control point DSCP for dedicated channel framing protocol DCHFP packet data units PDUs,
- Internet protocol IP queueing configuration in the base station (Node B) and radio network controllers RNCs for dedicated channel framing protocol DCHFP packet data units PDUs delivery,

- Internet protocol IP scheduling configuration in the base station (Node B) and radio network controller RNCs for dedicated channel framing protocol DCHFP packet data units PDUs dispatching,

- Multiplexing/de-multiplexing dedicated channel framing protocol DCHFP PDU internet protocol IP packets using point-to-point protocol multiplexing (PPPMux) over point-to-point protocol links, and

- Selection of multiple protocol label switching MPLS label switched path LSP (i.e so-called Experimental(field)-inferred per-hop-behaviour scheduling-class Label-Switched-Path E_LSP and/or Label-inferred per-hop-behaviour scheduling-class Label-Switched-Path L_LSP) for dedicated channel framing protocol DCHFP packet data unit PDU internet protocol IP packet delivery over internet protocol IP/multiple protocol label switching MPLS mesh networks between base stations (Node Bs) and radio network controllers RNCs.

These issues are considered further below. A system is described which uses DiffServ for supporting quality of service QoS and point to point multiplexing (PPPMux) and multiple protocol label switching (MPLS) as transport control schemes on IuB and IuR interfaces.

Service class-based selection of DiffServ control point DSCP for dedicated channel framing protocol packet data units DCHFP PDUs.

Two types of DiffServ classes, EF (Expedited Forwarding) and AF (Assured Forwarding), have been defined by the Internet Engineering Task Force Differentiated Services (DiffServ) Request for Comments. The other class is so-called best effort BE class. Corresponding per-hop behaviours are described below.

Expedited forwarding EF corresponds to packet treatment which is the same as or similar to point-to-point virtual released line with low loss, low latency, low jitter and assured bandwidth:

Assured Forwarding AF corresponds to packet treatment with differentiated packet delivery priorities and reliabilities and a proportional share of the allocated bandwidth. An internet protocol IP packet bearing an AF class is provided one of the four independently forwarded behaviours. Within each AF class, an IP packet is assigned one of three different levels of drop precedence, and re-ordering is not allowed for the same macro-flows.

Best-Effort: no special or differentiated treatment is provided to an internet protocol IP packet bearing zeros values for the DiffServ Class, i.e. no guarantee is provided on delivery reliability, latency and jitter.

Apart from the above three types of packet treatments explicitly indicated by a respective DiffServ control point DSCP value, a DSCP value of 11x000 is allocated for network control traffic. In consideration of the delay and jitter requirements, the DiffServ classes are allocated to the internet protocol IP packets that carry the dedicated channel radio frame packet data units DCHRF PDUs over the Iub/Iur interfaces depending on the UMTS quality of service QoS class. The recommended mapping of DiffServ classes to UMTS quality of service QoS classes is shown in Table 1.

|  | EF | AF | BE | Network Control |
|---|---|---|---|---|
| Conversational | Yes(1) | es (2) | N/A | N/A |
| Streaming | Yes(1) | Yes (2) | N/A | N/A |
| Interactive | N/A | Yes | Yes(3) | N/A |
| Background | N/A | N/A | Yes | N/A |
| Signalling Traffic (4) |  |  |  | Yes |
|  |  |  |  |  |

Table 1: Recommended mapping between DiffServ Classes (EF,AF etc) and UMTS QoS classes (Conversational, Streaming etc )for dedicated channel radio frame packet data units DCHRF PDUs

Notes on Table 1:

(1): The expedited forwarding EF class is strongly recommended to use for Conversation and Streaming services during the hand-over control including the soft handover. It may also be used before/after handover control but is not recommended due to the special requirements on the configuration to achieve expedited forwarding EF class packet delivery.
(2): Assured Forwarding AF class is applied to dedicated channel framing protocol packet data unit DCHFP PDU when a handover (such as a soft handover) is not performed.
(3): The best effort BE class is used for Interactive classes for services such as on-line chatting.
(4): The quality of service QoS for signalling traffic should be differentiated from that of user traffic. Signalling traffic takes one of the four quality of service QoS classes (e.g. Conversational or Interactive) at the UMTS bearer service level but may need higher processing priority at the transport bearer level, i.e. internet protocol bearer service level. Therefore, a different DiffServ control point DSCP from those used for user traffic classes needs to be used. Accordingly, the proposed DiffServ control point DSCP value for signalling traffic is11x000.

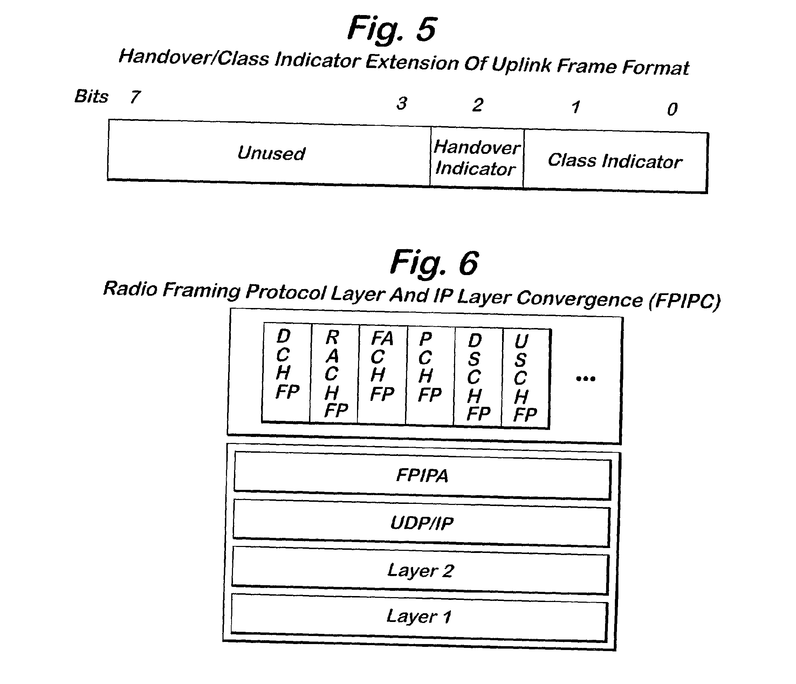

Table 1 indicates the selection of the DiffServ classes to be used for dedicated channel radio frame packet data units DCHRF PDUs for different UMTS quality of service QoS classes. So as to achieve the unambiguous mapping between the service specific dedicated channel framing protocol packet data unit DCHFP PDU and DiffServ, there is an explicit indication of the service class information from the DCH framing protocol instance to the DiffServ classifier at the internet protocol IP layer. It is proposed to use the lower three bits in the Spare Extension Octet of the up-link DCH frame shown in Figure 4. How the extension is used is shown in Figure 5.
As shown in Figure 5, the extension carries a class indicator CI and a handover indicator HI. The class indicator (CI) informs the IP DiffServ packet classifier/marker which service class the current frame carries. The handover indicator (HI) (optionally) indicates if the frame is being used for handover including the soft handover. Handover indicator HI is used to select the appropriate DiffServ control point DSCP under different transmission scenarios e.g. during, before/after soft handover. Bits 3 to 7 remain unused. "1" in handover indicator HI field indicates that the handover is proceeding while"0" no handover is being performed. The code values for class indicator CI are shown in Table 2.

Table 2:

| The code value of class indicator CI | | | |
|---|---|---|---|
| 1 1 | 1 0 | 0 1 | 0 0 |
| Conversational | Streaming | Interactive | Background |

The dedicated channel framing protocol DCHFP and Internet Protocol IP Convergence Layer (FPIPA)

To keep the internet protocol IP layer processing transparent to the dedicated channel framing protocol DCHFP, and to minimise the impact of the internet protocol IP-based transport on the Framing protocol processing, an extra layer (FPIPA layer) is introduced between the framing protocol layer and the internet protocol layer where DiffServ processing (see next section) is performed. The protocol stack is shown in Figure 6.

As shown in Figure 6, a frame protocol to internet protocol adaption FPIPA layer operative at the user terminal inserts the handover indicator HI and class indicator CI information into frame protocol FP packet data units PDUs and stores the number of soft handover connections (0 or 1 indicated by the handover indicator HI) of the user terminal. This information is used for dynamic provisioning of link bandwidth as discussed in the following sections.

In some other embodiments, the frame protocol to internet protocol adaption FPIPA is optional depending on the soft handover control mechanisms selected.

DiffServ Handling at the IP Layer on Iub/Iur

The dedicated channel framing protocol DCHFP layer passes the packet data unit PDU with the format shown in Figure 4 and the proposed extension shown in Figure 5 to the internet protocol IP layer where the packet data unit PDU is assembled into an internet protocol IP packet ,and subsequently a series Diffserv processing is performed.

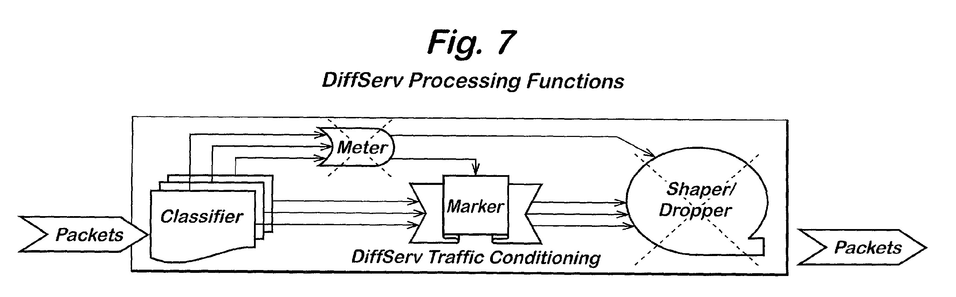

Figure 7 depicts the DiffServ processing operations incurred on an incoming internet protocol IP packet. The classifier operates to parse and categorise the incoming packets according to certain service provisioning policies into groups of DiffServ classes. The meter is to monitor and measure the behaviour of the incoming packets to check if it is "in-profile" or "out-of-profile". "In-profile" packets are those within pre-defined traffic characteristics such as peak rate, length of bursty period, etc. "Out-of-profile" packets are those which have violated the pre-defined traffic characteristics. The marker operates to mark the packets according to the determination of the classifier as to which DiffServ Class the packet belongs to and the outcome of the meter. Shaper/Dropper are the traffic policing operations that discipline traffic that is "out-of profile" to either shape, (i.e. it makes it "in-profile" or drops it).

The classifier categorises the incoming packet (packet assembled from dedicated channel framing protocol DCHFP packet data units PDUs) into different service categories based on the service types and the quality of service QoS requirements. For example, an internet protocol IP packet assembled from a dedicated channel framing protocol DCHFP packet data unit PDU of Conversational Class (CI = "11") during handover (handover indicator HI = "1") is categorised to belong to high priority task and then passed to the marker where the packet should be marked with DiffServ Class EF (DiffServ control point DSCP = "101110").

The meter and shaper/dropper should ideally be disabled for those dedicated channel framing protocol DCHFP packet data units PDUs during Handover (handover indicator HI = "1") due to the special delivery requirements on the delivery of those frames to be selected by the macro-diversity combining MDC process as descried in the previous sections.

Internet protocol IP queueing/scheduling control for "real-time" services during soft handover:

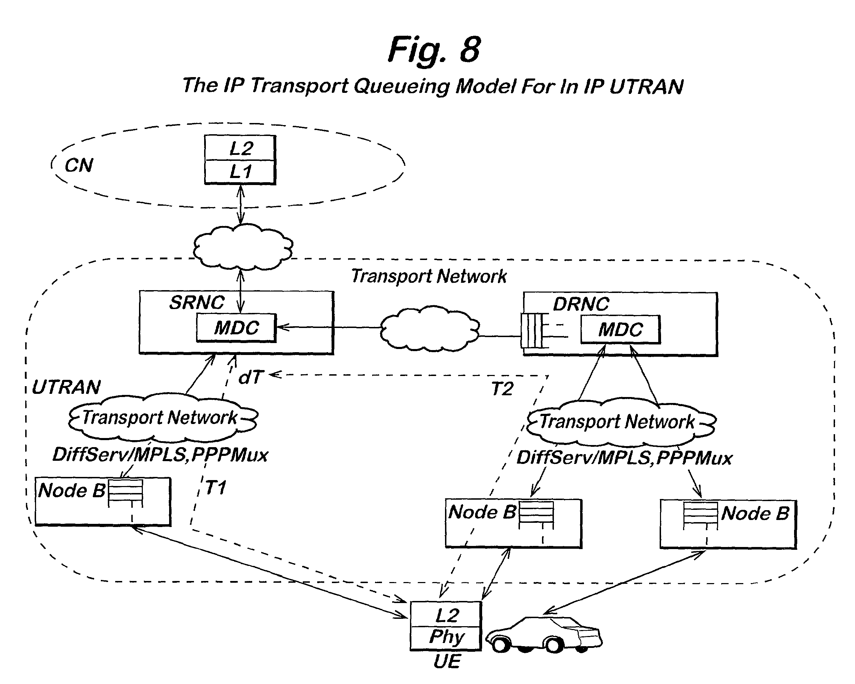

As shown back in Table 1, the expedited forwarding EF class is used for real-time services such as Conversational and Streaming services. An internet protocol IP packet bearing expedited forwarding EF class expects a delivery similar to a "point-to-point virtual leased line" with low loss, low latency and guaranteed bandwidth. Achieving the delivery effect of "virtual leased line" very much depends on the packet queueing and scheduling as well as bandwidth allocation at each end point where the packet is queued and dispatched for transmission. In an internet protocol UMTS terrestrial radio access network IP UTRAN, the endpoints for the internet protocol IP queuing are the base station (Node B) and the radio network controller RNC. A generic queueing configuration is shown in Figure 8.

Figure 8 shows the generic queueing configuration for calls in inter-RNC Soft handover. For the Iub interface, packets are queued at the base station (Node B) before being dispatched through the Iub interface to the serving (or drift) RNC. In Figure 8, the queues are shown in the base stations (Node Bs) which have soft handover connections. Apart from the queues in Node-B's for buffering the packets to go through the Iub interface, the drift radio network controller DRNC also manages the queues to the Iur interface linking the serving radio network controller SRNC where the Marco Diversity Combining is performed. The queuing function is shown in the drift radio network controller DRNC.

Apart from selecting the appropriate traffic characterising/conditioning schemes, among which a Token Bucket scheme is the recommended and appropriate configuration of the queues such as the selection of the queue length taking into account of the service-specific quality of service QoS requirements, accurate and efficient packet scheduling proves to be vital to meeting the quality of service QoS constraints. Four scheduling mechanisms are considered below to implement the different DiffServ per hop behaviours PHBs required:.

Priority Queuing (PQ):

Priority Queueing is a scheme which queues and schedules the packets strictly according to the priority assigned to each packet. The higher priority queues can pre-empt the lower priority ones. To implement DiffServ expedited forwarding EF, each priority queuing PQ scheme requires that the arrival rate at the queue is strictly less than its service rate( i.e output rate).

Weighted Fair Queueing (WFQ):

Each queue is assigned a certain "weight" which represents the allowed share of the total available bandwidth.

Class Based Queuing (CBQ):

Packets are queued and handled according to their quality of service QoS class. It works in a similar way to weighted fair queuing WFQ.

Weighted Round Robin (WRR):

Similar to weighted fair queuing WFQ, in a weighted round robin scheme weights are assigned to different queues (which are allocated for different quality of service QoS classes) and scheduling orders are based on the weights associated with each queue but the scheduling of queues is in turn, i.e., round robin style, say, from the queues with the heaviest weight to the queues with lowest weight. In comparison with other approaches, weighted round robin WRR represents the worst case in guaranteeing lilmits on queueing delay and jitter.

Due to the stringent delay and jitter requirements for some real-time services, DiffServ expedited forwarding EF is recommended for use for conversational and streaming classes, in particular, during soft handover control. According to the results of simulation of comparitive behaviours of priority queuing PQ, weighted fair queuing WFQ/class based queuing CBQ and weighted round robin WRR (e.g. Appendix A.3 RFC 2598), expedited forwarding EF using priority queuing PQ achieves a "virtual released line" effect while weighted round robin WRR represents the worse case.

It has been found by analysis and simulation that priority queuing PQ is the most appropriate scheduling mechanism for handling voice-over-internet protocol VoIP traffic and dedicated queues for voice-over-internet protocol VoIP packets are recommended. From simulation it was found that shorter packet sizes such as voice-over-internet protocol VoIP packets are more likely to incur larger jitter (in proportion/percent of its packet duration time) than larger packet sizes. Priority queuing PQ gives a very low jitter. For example, in comparison with weighted round robin WRR, priority queuing PQ can achieve jitter about a quarter of that incurred using weighted round robin WRR (RFC2598: Table 2). With an increasing ratio of service rate to arrival rate, jitter variations stabilise for both larger and small sized packets.

DiffServ expedited forwarding EF / Priority Queueing for soft handover

To guarantee the "virtual leased line" delivery behaviour using priority queuing PQ for DiffServ expedited forwarding EF traffic during the soft handover as well as delivering voice-over-internet protocol VoIP traffic with/without handover, it is required that the service rate is greater than the arrival rate for a priority queuing PQ. This requirement should apply to the queues at both base station (Node B)s and the serving radio network controller SRNC and the drift radio network controller DRNC as shown in Figure 8. But due to the dynamic variations in the number of soft handovers, the arrival rate can vary depending on the number of soft handovers in progress and so cause variations in the ratio of service rate to arrival rate if the service rate remains unchanged. Changing the ratio between service rate and the arrival rate will lead to the increase of jitter variation and may even cause violation of the need to maintain service rate higher than the arrival rate in order to achieve consistent expedited forwarding EF delivery behaviour for traffic in soft handover and voice-over-internet protocol VoIP traffic. Two possible solutions are proposed, namely static provisioning of link capacity and dynamic provisioning of link capacity as discussed in turn below.

Static Provisioning of Link Capacity

It is estimated that soft handover occurs in about 20 - 40 % of connections. To support connections in soft handover, the following additional resources need to be provided by the system:

(1) an additional Rake receiver channels in the base station (Node B),
(2) additional transmission links between base station (Node B) and radio network controller RNC and between radio network controller RNCs, and
(3) additional Rake fingers in the mobile stations.

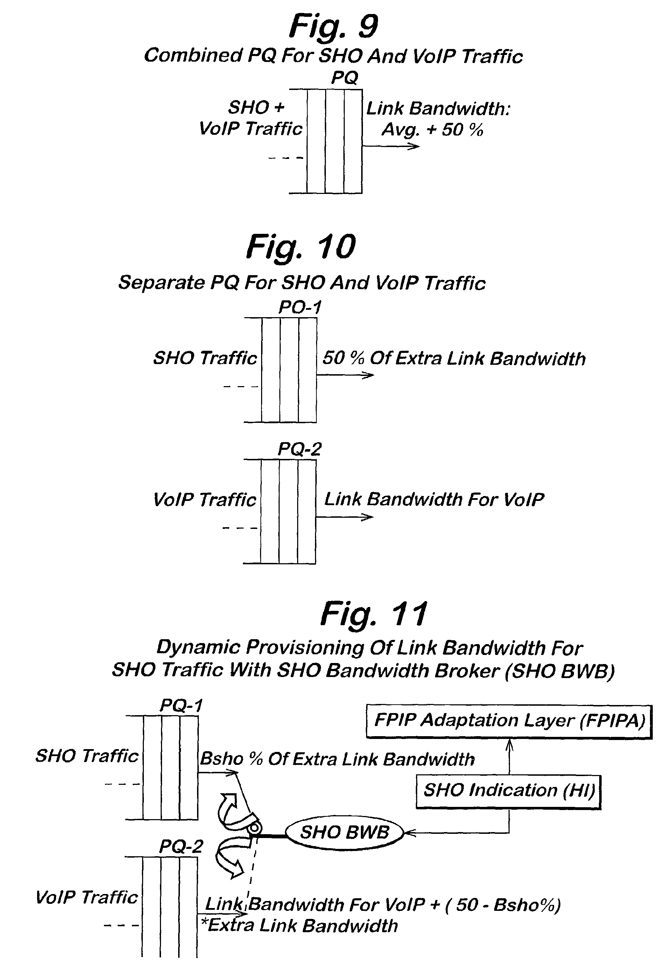

Over-provisioning of link capacity by about 20 - 40 % will approximately lead to a ratio of service rate to arrival rate of around 1.2 to 1.4 provided that the extra link capacity is used solely for traffic in soft handover. Taking into account of the maximum number of soft handover connections to reach 40%, a conservative estimate of the necessary service/arrival rate ratio is about 1.5. This will suffice, in general, the need for priority queuing PQ-based scheduling to achieve expedited forwarding EF delivery behaviour. In static provisioning of this extra link capacity, the queue that uses priority queuing PQ for serving the dedicated channel framing protocol packet data units DCHFP PDUs in soft handover (indicated by the handover indicator HI) will be provided with extra link capacity of no less than 50% more than the average traffic volumes of voice-over-internet protocol VoIP services. Two possible queue configurations can be considered: combined priority queuing PQ queue for both soft handover traffic and the voice-over-internet protocol VoIP traffic and separate priority queuing PQ queues for soft handover traffic and voice-over-internet protocol VoIP traffic. These two queue configurations are shown in Figure 9 and Figure 10.
The combined priority queuing PQ processing for both soft handover and voice-over-internet protocol VoIP traffic (Figure 9) handles the soft handover traffic and voice-over-internet protocol VoIP traffic in the same queue. This is likely to incur larger jitter variation but more efficient in the resource utilisation with the extra 50% capacity being used for voice-over-internet protocol VoIP traffic when soft handover traffic is not using the overall extra link capacity.
For the separate priority queuing PQ queueing configuration in Figure 10, the extra 50% link capacity is dedicated to the soft handover traffic. This configuration generates less jitter variation due to the dedicated resource allocation to the soft handover and the voice-over-internet protocol VoIP traffic but is less efficient in using resources. Priority queuing PQ-1 for soft handover traffic and priority queuing PQ-2 for voice-over-internet protocol VoIP traffic can served by Weighted Round Robin schemes depending on the allocated share of the total link capacity for soft handover traffic and the voice-over-internet protocol VoIP traffic.

Dynamic Provisioning of Link Capacity

A further improvement on resource utilisation is by using dynamic provisioning, as shown in Figure 11.
Figure 11 shows that the soft handover bandwidth broker SHO BWB dynamically "switches" a proportion Bsho of the extra link capacity (e.g. 50%) allocated for supporting soft handover traffic based on (i) the current number of soft handover connections in progress, (ii) the Service/Arrive Rate Radio for the soft handover priority queuing PQ-1 queue, and (iii) the number of incoming soft handover connections communicated from the frame protocol to internet protocol adaption FPIPA layer which depends on the number of soft handover connections within the current base station (Node B) and the radio network controller RNC. Each time the soft handover bandwidth broker SHO BWB adjusts the bandwidth allocation proportion for the soft handover priority queuing PQ-1, the estimate value of Bsho can be estimated as :

$$Bsho(i+1) \% = Bsho(i)\% + [ \Delta Csho(i+1)/(Csho(i) + \Delta Csho(i+1))]\%$$

Csho(i) is the current number of connections in soft handover, $\Delta$Csho(i+1) the increase/decrease in the number of connections in soft handover. This applies when the peak arrival rate of the new connections in soft handover is no more than the peak rate of any existing connections in soft handover. Otherwise, Bsho needs to adjusted so that the service/arrival rate ratio remains the same.

**Claims**

**1.** A Universal Mobile Telecommunications System UMTS telecommunications network comprising at least one radio network controller, a plurality of base stations and a user terminal,
a base station being operative to receive from the user terminal UMTS data packets having an associated UMTS quality of service QoS class,

the base station being operative to communicate the data packets to an associated radio network controller in accordance with an internet protocol IP by assigning an internet protocol IP QoS class dependent upon whether soft handover of the user terminal to another base station is occuring and/or UMTS QoS class.

2. A UMTS telecommunications network according to claim 1, in which an expedited internet protocol IP QoS class is assigned to data packets of any UMTS QoS class directed from the user terminal during soft handover of the user terminal.

3. A UMTS telecommunications network according to claim 2, in which each UMTS data packet from the user terminal include an indicator of whether soft handover is occurring, the internet protocol QoS class being assigned dependent the indicator upon formatting the UMTS data packet into an internet protocol IP data packet.

4. A UMTS telecommunications network according to any preceding claim, in which each UMTS data packet includes an indicator of UMTS QoS class, the internet protocol QoS class being assigned dependent upon UMTS QoS class upon formatting the UMTS data packet into an internet protocol IP data packet.

5. A UMTS telecommunications network according to any preceding claim, in which internet protocol data packets of an expedited IP QoS class are queued at the base station for transmission to the associated radio network controller in a queue or queues which takes precedence over other IP data packets for transmission thereto.

6. A UMTS telecommunications network according to claim 5, in which single queue is provided for all data of the expedited IP service class to be transmitted from the base station to the associated radio network controller.

7. A UMTS telecommunications network according to claim 6, in which queues are provided for each of a plurality of different types of IP data packets of the expedited IP service class to be transmitted from the base station to the associated radio network controller.

8. A UMTS telecommunications network according to claim, in which resources for data transmission are allocated dynamically between the queues at a base station dependent upon previous usage.

9. A UMTS base station operative to receive, in use, from a user terminal UMTS data packets having an associated UMTS quality of service QoS class, the base station being operative, in use, to communicate the data packets to an associated radio network controller in accordance with an internet protocol IP by assigning an internet protocol IP QoS class dependent upon whether soft handover of the user terminal to another base station is occuring and/or UMTS QoS class.

10. A user terminal operative to provide UMTS data packets each including data which indicates whether the user terminal is in the process of soft handover and/or data which indicates associated UMTS quality of service QoS class .

(i)

(ii)

(iii)

Fig. 1

Softer Handover

Intra Node B (Inter Cell)

(i)

N Apl    CN(UMTS)

UTRAN
SRNS
SRNC
NodeB   NodeB

(ii)

N Apl    CN(UMTS)

UTRAN
SRNS
SRNC
NodeB   NodeB

(iii)

N Apl    CN(UMTS)

UTRAN
SRNS
SRNC
NodeB   NodeB

Inter Node B (Intra RNS)

**Fig. 2**

Inter-Node B Soft Handover

EP 1 347 662 A1

EP 1 347 662 A1

(i)

| N Apl | CN(UMTS) | N Apl |

UTRAN
SRNS
SRNC
NodeB  NodeB

RNS
RNC
NodeB  NodeB

(ii)

| N Apl | CN(UMTS) | N Apl |

UTRAN
SRNS
SRNC
NodeB  NodeB

DRNS
DRNC
NodeB  NodeB

(iii)

| N Apl | CN(UMTS) | N Apl |

UTRAN
SRNS
SRNC
NodeB  NodeB

DRNS
DRNC
NodeB  NodeB

Inter RNS

**Fig. 3**
*Inter RNS Soft Handover*

# Fig. 4

## UPLINK DATA FRAME Structure For DCH

| 7 | | 0 |
|---|---|---|
| Header CRC | | FT |
| CFN | | |
| Spare | TFI Of First DCH | |
| | | |
| Spare | TFI Of Last DCH | |
| First TB Of First DCH | | |
| | | |
| First TB Of First DCH (cont.) | | Pad |
| | | |
| Last TB Of First DCH | | |
| | | |
| Last TB Of First DCH (cont.) | | Pad |

Header

First TB Of Last DCH

First TB Of Last DCH (cont.) | Pad

⟩Payload

Last TB Of Last DCH

First TB Of Last DCH (cont.) | Pad

QE

| CRCI Of First TB OF First DCH | | | | | | | |
|---|---|---|---|---|---|---|---|

| | | | | CRCI Of Last TB OF Last DCH | Pad |
|---|---|---|---|---|---|

Spare Extension

Payload Checksum

Payload Checksum (cont.)

⟩Optional

*Fig. 4 (Cont.)* UPLINK DATA FRAME Structure For DCH

# Fig. 5
## Handover/Class Indicator Extension Of Uplink Frame Format

| Bits 7 | 3 | 2 | 1 | 0 |
|---|---|---|---|---|
| Unused | | Handover Indicator | Class Indicator | |

# Fig. 6
## Radio Framing Protocol Layer And IP Layer Convergence (FPIPC)

| DCH FP | RACH FP | FACH FP | PCH FP | DSCH FP | USCH FP | ... |
|---|---|---|---|---|---|---|

| FPIPA |
|---|
| UDP/IP |
| Layer 2 |
| Layer 1 |

EP 1 347 662 A1

# Fig. 7

### DiffServ Processing Functions

Classifier

Meter

Marker

Shaper/Dropper

DiffServ Traffic Conditioning

Packets

Packets

EP 1 347 662 A1

# Fig. 8

## The IP Transport Queueing Model For In IP UTRAN

EP 1 347 662 A1

# Fig. 9
## Combined PQ For SHO And VoIP Traffic

PQ

SHO +
VoIP Traffic

Link Bandwidth:
Avg. + 50 %

# Fig. 10
## Separate PQ For SHO And VoIP Traffic

PQ-1

SHO Traffic

50 % Of Extra Link Bandwidth

PQ-2

VoIP Traffic

Link Bandwidth For VoIP

# Fig. 11
## Dynamic Provisioning Of Link Bandwidth For SHO Traffic With SHO Bandwidth Broker (SHO BWB)

PQ-1

SHO Traffic

Bsho % Of Extra Link Bandwidth

FPIP Adaptation Layer (FPIPA)

SHO Indication (HI)

SHO BWB

PQ-2

VoIP Traffic

Link Bandwidth For VoIP + ( 50 - Bsho%) *Extra Link Bandwidth

**European Patent Office**

## EUROPEAN SEARCH REPORT

Application Number

EP 02 25 1231

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ETSI: "TS 123 107 v3.4.0 (2000-10) UMTS QoS concept and Architecture." 1 October 2000 (2000-10-01) , ETSI , SOPHIA ANTIPOLIS, FRANCE XP002208412 | 1,4,9,10 | H04Q7/30 |
| Y | * paragraph [6.4.7] * --- | 5-7 | |
| Y | FRIEDMAN S W ET AL: "QUEUEING TECHNIQUE FOR BANDWIDTH ALLOCATION IN A PACKET SWITCHED NETWORK" IBM TECHNICAL DISCLOSURE BULLETIN, IBM CORP. NEW YORK, US, vol. 18, no. 6, November 1975 (1975-11), pages 1787-1788, XP000809580 ISSN: 0018-8689 * page 1788, line 8 - line 33 * ----- | 5-7 | |

|  | TECHNICAL FIELDS SEARCHED (Int.Cl.7) |
|---|---|
|  | H04Q |

The present search report has been drawn up for all claims

| Place of search | Date of completion of the search | Examiner |
|---|---|---|
| BERLIN | 1 August 2002 | Bernedo Azpiri, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)